# EUROPEAN PATENT SPECIFICATION

(11) **EP 3 680 773 B1**
(45) Date of publication and mention of the grant of the patent: **02.08.2023**
(21) Application number: 20150616.9
(22) Date of filing: 07.01.2020
(51) Int. Cl.: G06F 8/61, G06F 8/654, G06F 8/658, G06F 8/65, G07C 5/00

(54) **SYSTEM AND METHOD FOR UPDATING A COMPUTING DEVICE**
SYSTEM UND METHODE ZUR AKTUALISIERUNG EINES COMPUTERGERÄTES
SYSTÈME ET MÉTHODE POUR LA MISE À JOUR D'UN DISPOSITIF INFORMATIQUE

(30) Priority: 08.01.2019 US 201962789533 P
(43) Date of publication of application: 15.07.2020
(73) Proprietor: Argus Cyber Security Ltd, 6789155 Tel Aviv (IL)
(72) Inventor: Bernstein, Avraham, 65824 Schwalbach a. Ts. (DE)
(74) Representative: Continental Corporation

(56) References cited:
- EP-A1- 3 273 350
- WO-A1-2018/054496
- US-A1- 2018 365 007

## Description

### FIELD OF THE INVENTION

The present invention relates generally to updating a computing device. More specifically, the present invention relates to updating software or firmware in a device having tight memory constraints.

### BACKGROUND OF THE INVENTION

Updating software or firmware in a computing device using a server that sends a (possibly compressed) new or updated software version to the computing (target) device is known in the art. Compression utilities such as 7zip and xz are also known in the art.

However, known systems and methods for updating a target device suffer from a number of drawbacks. For example, since known systems and methods transfer a software-update object (e.g., file) to the target device, the target device must be able to store the old (current) software version and the software-update object, at the same time. Yet another disadvantage of known systems and methods is that, when a patch file is used, they assume the target device is capable of storing the patch file in its random access memory (RAM). Yet another disadvantage of known systems and methods, e.g., bsdiff is they require large amounts of RAM due to their memory footprint.

As of 2018, the state-of-the-art for lossless compression of binary executable files is the xz algorithm. The default xz algorithm is CPU architecture agnostic, although it can be improved (often by up to 10%) by adding a driver that is architecture aware. In many cases compressed "delta encoding" (developed by Colin Percival in 2003) provides much better compression (e.g. by a factor of 2-3 times or better) than xz when the differences between an original file "A" and an update file "B" are "not too great". Note that Percival's algorithm is CPU architecture agnostic. As of 2018, Percival's algorithm represents the state-of-the-art in the field of compressed delta encoding that is CPU architecture agnostic and/or compression that is CPU architecture agnostic.

WO 2018 054 496 A1 refers to a patch generator for generating a patch that expresses a series of updates to a source image that will transform the source image into a target image. The patch generator is configured to compare sections of the target image, in turn, with respective versions of the source image. The patch generator is configured to determine the respective versions of the source image by assuming that a device for which the patch is intended will implement the patch by progressively updating a source image that it stores and by determining the respective versions of the source image to be versions of the source image that the patch generator expects the device to be storing when it implements each update of the series of updates expressed by the patch. The patch generator is configured to compare each section of the target image with a respective version of the source image that the patch generator expects the device to be storing at the point when it implements an update corresponding to that section of the target image in the patch. The patch generator generates the series of updates for the patch in dependence on the comparisons between the sections of the target image and the respective versions of the source image. Comparing each section of the target image with versions of the source image that are expected to be stored by the device during the process of implementing the patch allows the possibility that the device could change the source image in its memory while it implements the patch. This can reduce memory usage at the device, by removing the need for the device to keep source image unchanged in memory while it constructs its replacement.

EP 3273350 A1 refers to a software updating apparatus that can flexibly respond to various situations, including update capacity and use cases of each ECU, in a case of updating control information of a plurality of ECUs. Update control information necessary for update processing, including update data to be newly applied to an ECU, is received from a server and control of the update processing is performed based on the received update control information.

US 2018/365007 A1 relates to software updating. A computing device receives an update package wirelessly or over the air. The update package includes several sets of update information including a set of update information for updating a particular file. The update file includes a segment map, patch payload and archive payload. The updater in turn uses the patch data in the patch payload to update segments that are designated as patch segments. Segments updated by archiving have their content replaced entirely by compressed data in the archive payload. Segments updated by copying use the data of the old version of the segment as of the data of the new version.

However, in order to take advantage of delta encoding there must be enough memory on the target system, whether in RAM or flash memory or storage, to store both the original file "A" and the update file "B", while a delta "patch" "P" is being applied. Accordingly, known systems and methods are inadequate when storage constraints preclude storing, on the target device and at the same time, the new and current software objects.

### SUMMARY OF THE INVENTION

The invention is defined by the subject matter of the independent claims. Preferred embodiments are defined in the dependent claims.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2A shows a system according to illustrative embodiments of the present invention;
Fig. 2B shows a system according to illustrative embodiments of the present invention;
Fig. 3A shows arrangement of data on a flash memory in target device and a flow of a method according to illustrative embodiments of the present invention;
Fig. 3B shows arrangement of data on a flash memory in target device and a flow of a method according to illustrative embodiments of the present invention; and
Fig. 4 shows arrangement of data on a flash memory in target device and a flow of a method according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

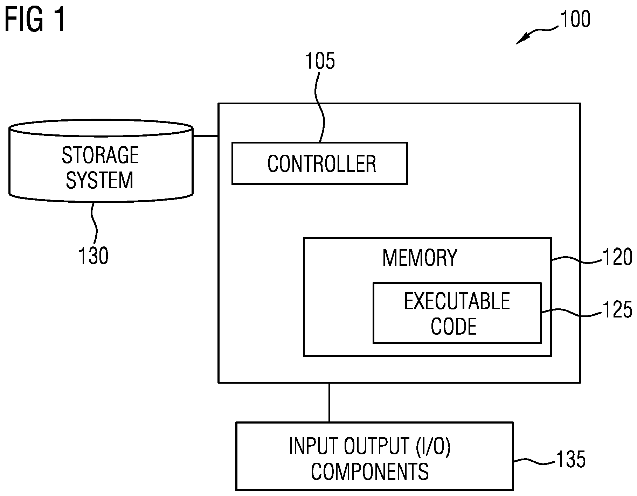

Reference is made to Fig. 1, showing a non-limiting, block diagram of a computing device or system 100 that may be used by, or included in, a system according to some embodiments of the present invention. Computing device (or system) 100 may include a controller 105 that may a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application, e.g., in a server, that generates or creates software update objects and/or executable code 125 may be an application, e.g., in a device being updated, that uses software update objects to update software or firmware objects to update a device as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, servers, devices, units or modules described herein, may be, or may include, controller 105, memory 120 and executable code 125. Computing systems discussed herein such as servers or devices being updated may include components such as in Fig. 1.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, storage system 130 may be a non-volatile memory (e.g., a flash memory) included in memory 120 may be. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 may include a flash memory and a RAM), and a plurality of storage units. A system may additionally include other suitable hardware components and/or software components. In some embodiments, a system may include or may be, for example, a server computer, a network device and any number of target or remote devices, e.g., internet of things (IoT) devices, electronic control units (ECUs) in a vehicle, e.g., ECUs included in a car, a boat or an airplane.

The terms "binary" and "image" as used in this application refer to software and possibly additional data used for operating a computing device, for example, an image may be sent from a server to a remote device where it may be used or executed by a controller on the remote device. The terms software, image and binary as referred to herein may mean the same thing and may be used interchangeably herein.

The terms "target device", "remote machine" and "remote device" as used in this application refer to a computing device that is being updated. For example, a target or remote device can be an ECU or an IoT device. The terms "target device", "remote machine" and "remote device" as referred to herein may mean the same thing and may be used interchangeably herein.

The terms "data block" or simply "block" as used in this application refer to an amount of digital information of data as known and used in the art. For example, blocks are used when referring to storage or memory, e.g., a flash memory may be designed to store data in blocks, e.g., blocks can be 512 bytes. The terms "data block" and "block" as referred to herein may mean the same thing and may be used interchangeably herein.

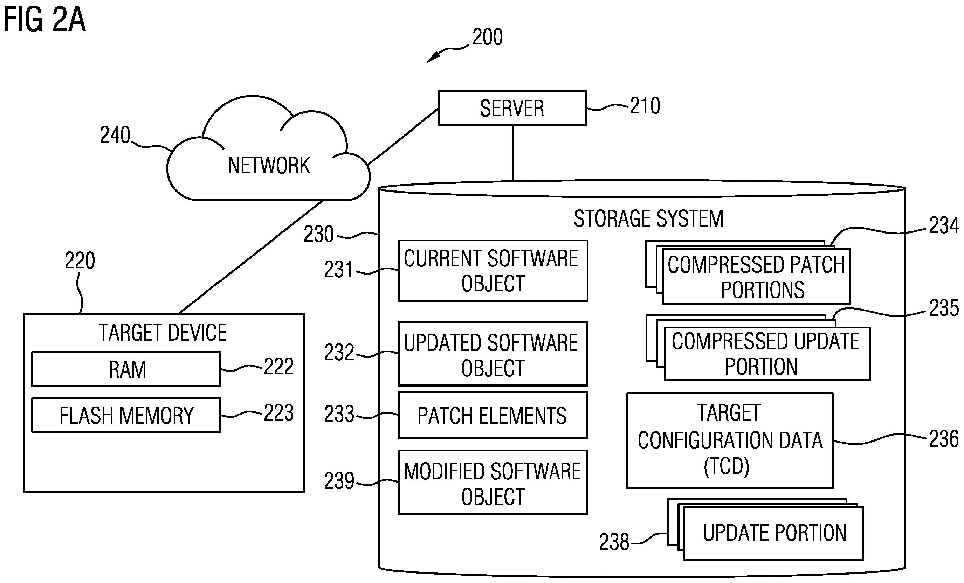

Reference is made to Fig. 2A, a system 200 according to some embodiments of the present invention. As shown, system 200 may include a server 200 and a target device 220. As shown, target device 220 may include a RAM 222 that may be, or may include components as described with respect to memory 120. As further shown, target device 220 may include a flash memory 223. While flash memory is mainly described or referred to herein, it will be understood that any electronic, non-volatile computer storage medium adapted to store digital data and/or be electrically erased and reprogrammed may be used instead of, or in addition to, flash memory 223.

System 200 or components of system 200 may include components such as those shown in Fig. 1. For example, server 210 and target device 220 may be, or may include, a controller 105, a memory 120 and executable code 125. As further shown, system 200 may include, or be operatively connected to a network 240.

Network 240 may be any suitable network that enables server 21 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240.

As shown, server 210 may be operatively connected (e.g., directly or over a network) to storage system 230. Storage system 230 may be similar to, or include components of, storage system 130, for example, storage system 230 may be a hard disk or a network storage device or system. As shown further shown, storage system 230 may include a current software object 231, modified software object 239 (that may be a modified software version of current software object, an updated software object 232, target configuration data (TCD) 236, one or more patch elements patch element 233, one or more update portion objects 238, one or more compressed patch elements or portion 234 and one or more compressed update portions (collectively referred to hereinafter as update portions 238, compressed update portions 235, patch elements 233 and/or compressed patch portions 234 or individually as update portion 238, compressed update portion 235, patch element 233 and/or compressed patch portion 234, merely for simplicity purposes). Where applicable, the terms "portion", "chunk", "segment", "fragment" or "part" as used herein may mean the same thing and may be used interchangeably, e.g., any one of a chunk, segment or portion of an object may be used.

Current software object 231 may be the software or firmware object currently stored, used or executed by target device 220. For example in addition to the copy or instance of current software object 231 in storage system 230, current software object 231 may be stored in flash memory 223 in target device 220. Generally, current software object 231 may include executable code 125 that is executed by a controller 105 in target device 220, e.g., a set of programs that, when executed by controller 105, perform some or all the functions of target device 220, for example, functions of an ECU, an IoT device or any other device.

Current software object 231 may be referred to herein as the old software. Updated software object 232 may be an object that is, or that includes, updates or modifications for current software object 231, or updated software object 232 may simply be a replacement of current software object 231 (e.g., a binary image as referred to in the art). Updated software object 232 may be referred to herein as a new software object or as a software update object. Patch element 233 may be a patch element or object that includes information usable to create a portion, part, chunk or segment of updated software object 232 based on current software object 231 or based on modified software object 239 (a modified version of current software object 231) as described.

Generally, a patch file or patch element 233 may include information that is usable for generating a portion or part of updated software object 232 based on at least one of current software object 231 and modified software object 239. Otherwise described, a patch element 233 may be viewed as a recipe for generating a portion of updated software object 232 based on modified software object 239 or based on current software object 231. For example, a patch element 233 may include differences between a portion of modified software object 239 and a portion of updated software object 232 thus, given a patch element 233 and modified software object 239 (or current software object 231), a portion of updated software object 232 can be generated. Accordingly, update objects such as patch element 233, compressed patch portion 234 and compressed patch portion may be usable for generating potions (or all) of updated software object 232.

Generally, generating or creating a first object (e.g., generating or creating a patch element 232, a compressed update portion 235 or a compressed patch portion 234) based on second and third objects (e.g., based on updated software object 232 and based on modified software object 239) may include generating the content of the first object based on content in the second and third objects. For example, to generate a patch element 232 (first object) based on updated software object 232 and based on modified software object 239 (second and third objects) server 210 may compare data in updated software object 232 with data in software object 239 and record the differences between data in these two objects in patch element 232. It will be understood that, according to some embodiment of the invention and in a similar way, any object such as patch element 233, compressed patch portion 234 and compressed update portion 235 may be created based on content in one or more of current software object 231, updated software object 232 and/or modified software object 239. It will be understood that generating a first object based on second and third objects, e.g., generating a compressed update portion 235 based on updated software object 232 and modified software object 239, may include any operation or logic that, based on content or digital information in the second and third objects, calculates, determines, creates or generates digital information to be included in the first object.

Current software object 231 and updated software object 232 may be obtained by, or provided to, server 210. For example, a user or application may store current software object 231 and updated software object 232 in storage system 230 or server 210 may download current software object 231 and updated software object 232, e.g., from an OEM's database or web server. It will be understood that the scope of the invention is not limited by the way current software object 231 and updated software object 232 are obtained by server 210. Compressed patch portion 234 objects may be created by compressing patch element 233 objects. Compressed update portions compressed patch portion objects may be created by compressing update portion object 238 objects. For example, updated software object 232 may be divided into update portion object 238 portions, segments, fragments or pieces such that each fragment is the size of a known, threshold, or predefined size and the update portion object 238 portions may be compressed to generate compressed update portion compressed patch portion objects.

TCD 236 may be an object that includes information related to target device 220. For example, the block size used in a flash memory 223 of target device 220 may be recorded or included in TCD 236. Any other information related to target device 220 may be included in TCD 236, e.g., a memory size (e.g., size or capacity of RAM 222 and/or of flash memory 223), computational capacity (e.g., type of CPU, CPU clock etc.) and network capacity (e.g., a network link speed or the speed with which target device 220 can receive data from a network), the size of memory in target device 220, the type of controller used, hardware version and the like. Update portion objects 238 may be portions of updated software object 232, e.g., uncompressed block size portions of updated software object 232.

For the sake of simplicity, patch elements 233, compressed patch portions 234, compressed update portion 235 and update portion objects 238 may be referred to herein as update objects. For example, as described, each of patch elements 233, compressed patch portion 234, compressed patch portion, and update portion object 238 may be an update object that is usable for generating or creating a portion of updated software object 232 based on current software object 231, that is, by examining digital content in current software object 231 and the content of the update object, server 210 may calculate, determine and/or generate a portion of updated software object 232, e.g., an update portion objects 238. Accordingly, in some embodiments, server 210 or management unit 252 uses an update object (e.g., patch elements 233, compressed patch portions 234, compressed update portion 235 and update portion objects 238) to generate a portion of updated software object 232. As further described, using an update object to generate a portion of updated software object 232 may include examining data in current software object 231 and/or examining data in modified software object 239. For example, content of a portion of updated software object 232 may be calculated based on an update object and further based on data in current software object 231 and/or data in modified software object 239.

As further described, server 210 or management unit 252 may create or generate update objects based on a modified version of current software object 231, e.g., update objects such as patch element 233, compressed patch portion 234 and compressed patch portion, may be created based on modified software object 239.

For example, a copy of current software object 231 may be made such that a modified version of current software object 231 is created or generated and maintained by modifying the copy. For example, at a first time or stage, modified software object 239 may be an identical copy of current software object 231 created by copying or duplicating current software object 231. Next, modified software object 239 may be created or modified by overwriting part of it with (using content in) an update object (e.g., an update portion object 238), accordingly, modified software object 239 may be viewed, and referred to herein, as a modified software object. As described, update objects, e.g., patch element 233, compressed patch portion 234 and compressed patch portion, may be created based on a modified version of current software object 231 and not based on current software object 231, e.g., based on modified software object 239.

For example, in a process or flow that includes generating a set of update objects for updating a device from current software object 231 to updated software object 232, a first update object in the set (e.g., a compressed patch portion update object) may be generated (e.g., by server 210 or by management unit 252) based on data in current software object 231 and based on data in updated software object 232, modified software object 239 may be modified using (or based on digital information in) the first update object and a second update object in the set (e.g., a compressed patch portion 234 update object) may be generated based on digital information in (now modified) modified software object 239 and based on digital information in updated software object 232. As described, a target device may use the first update object and the current software object 231 to generate a first portion of updated software object 232 and the target device may use the second update object and the modified software object 239 to generate a second portion of updated software object 323. Otherwise described, to generate updated software object 323, the target device may follow the flow or logic used by a server to generate the update objects.

Embodiments of the invention improve the relevant technological fields, e.g., cyber security, by protecting update data sent over a network. For example, unaware of the way modified software object 239 is modified and updated objects are created, a hacker or eavesdropper who manages to obtain update objects sent from server 210 to target device 220 cannot reconstruct updated software object 232 from current software object 231. Thus protection of data and security may be improved.

It will be understood that any logic or operation may be used to generate a modified version of current software object 231, e.g., modified software object 239. For example, instead of (or in addition to) updating modified software object 239 as described, to create modified software object 239, server 210 may scramble data in a copy of current software object 231, apply operations such as XOR to data in a copy current software object 231, encrypt data in a copy of current software object 231 and so on. Of course, methods of creating modified software object 239 described herein may be combined, e.g., modified software object 239 may be created or generated by scrambling data in a copy of current software object 231 and the modified software object 239 may further be updated using one or more (e.g., first and second) update objects and then used for generating additional (e.g., third and fourth) updated objects as described.

Objects stored in storage system 230 as shown, e.g., current software object 231, updated software object 232, patch element 233, compressed patch portion 234, compressed patch portion and TCD 236 may be any suitable digital data structures, constructs or computer data objects that store or include digital information. For example, each of current software object 231, updated software object 232, patch element 233, compressed patch portion 234, compressed patch portion and TCD 236 may be, or may include, files, tables, entries in a database or any other digital information object or construct and thus may enable storing, retrieving and modifying digital information, e.g., values, strings and the like.

Embodiments of the invention may be related or relevant to any type of target device 220. For example, embodiments of the invention may be used to update ECUs in a car, train, aircraft, ship or any system or vehicle that lifts, carries or transports humans, livestock or cargo.

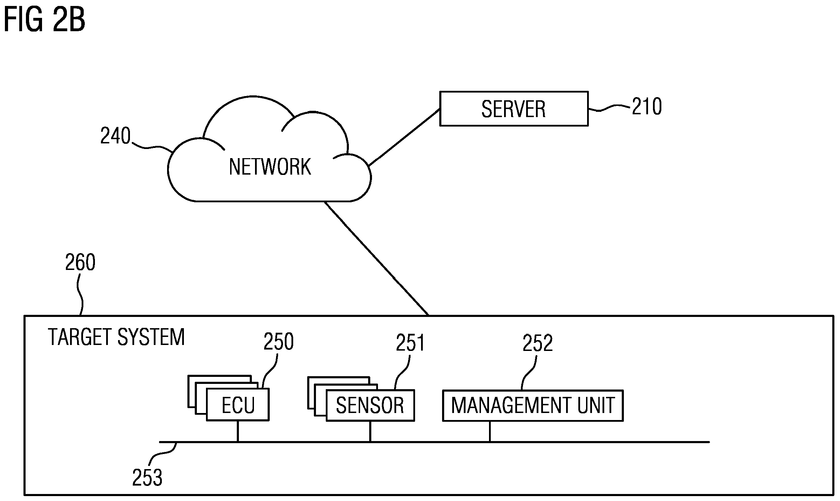

Reference is made to Fig. 2B that shows a system according to illustrative embodiments of the present invention. As shown, target device 220 may be any device, system, vehicle or any other applicable entity. For example, target device 220 may be, or it may be included or embedded in, an IoT device or a vehicle, e.g., an aircraft, car train or ship. Although vehicles such as cars are mainly described herein, other vehicles such as ships, trains and aircrafts are similarly applicable, it will be understood that the scope of the invention is not limited by the type, usage or nature of target device 220 and/or target system 260. For example, target system 260 may be, or it may be included in, a ship, airplane or car that includes an in-vehicle network 253, a management unit 525, one or more ECUs 250 and one or more sensors 251 (collectively referred to hereinafter as ECUs 250 and/or sensors 251 or individually as ECU 250 and/or sensor 251, merely for simplicity purposes).

Network 253 may be any suitable network that enables ECUs 250, sensors 251 and management unit 253 to communicate or exchange digital information. Network 253 may be, may include or may comprise any suitable network infrastructure and support any suitable protocol, e.g., Ethernet, CAN, IP, TCP and the like. Network 253 Accordingly, numerous elements of network 253 are implied but not shown, e.g., routers, gateways etc. It will be recognized that embodiments of the invention are not limited by the nature of network 253.

Updating a remote or target device as described here may include updating software or firmware in one or more of ECUs 250, e.g., when target system 260 is target device 220. Although a flow that includes operations performed by server 210 is mainly described herein it will be understood that management unit 252 may act as the server. For example, provided with enough memory to store current software object 231 and updated software object 232, management unit 252 may be provided with current software object 231 and updated software object 232 and may perform the role of server 210 as described herein, e.g., simulate the state of flash memory 223 in one of ECUs 250, generate, store and send to the ECU, objects such as patch element 233, compressed patch portion 234, compressed patch portion etc.

To efficiently update a remote machine (target device 220) from an old image (binary) file current software object 231 to a new, revised or updated image file updated software object 232, it is desirable to transfer the smallest possible file that will accomplish the update. To accomplish this, known systems use a server that sends a compressed version of the new or updated software or image to the remote machine which decompresses it to generate updated software object 232. Compression utilities for binary images, such as xz and 7zip can typically achieve compression ratios from 2:1 to 3:1. A patch file can be compressed, e.g., using the bsdiff utility a compressed patch file for updating current software object 231 to updated software object 232 can be three ("3") times smaller than the compressed updated software object 232.

Known systems, methods or utilities, e.g., basdiff, cannot be used in a flash memory and/or RAM memory restricted environments typically found on embedded systems. For example, bsdiff assumes that there is sufficient disk or flash memory storage to implement an "A/B update". As known in the art, an "A/B update" is a method or procedure whereby the new software (updated software object 232) and the old software (current software object 231) need to be simultaneously stored in flash memory 223 of target device 220. Bsdiff cannot operate unless there is sufficient storage to store the complete versions of both the original current software object 231 file and the generated updated software object 232 file for the duration of the update.

Moreover, known systems and methods assume (and fail unless) there is sufficient RAM to store the complete compressed patch file PZ in RAM for the duration of the update. Yet another problem of known methods such as bsdiff is the large memory footprint of bsdiff and other decompression utilities.

Embodiments of the invention may resolve memory related problems discussed above while retaining nearly the same level of byte transfer efficiency of known systems and methods. As described, it was found that using a compressed patch file is more efficient then using a compressed updated software object 232 object since the size of the compressed patch file is typically smaller than that of the compressed updated software object 232 object. Embodiments of the invention enable a technique in an environment where an "A/B update" is not feasible due to storage constraints on the target device, where among other things, there is not enough storage space to simultaneously hold both current software object 231 and updated software object 232. For example, in some embodiments, during the course of an update, some or all of current software object 231 is overwritten in situ, e.g., portion by portion or block by block, while updated software object 232 is being generated thus the need to store, in target device 220, both current software object 231 and updated software object 232 is eliminated.

In some cases, there is insufficient RAM on the target device for the software implementation to process more than a few flash memory blocks at a time. In fact, in many cases the spare RAM or flash memory on a target device is less than a single block of flash memory. Since known update methods only work with complete files and/or complete blocks, they cannot be used when a complete update file or complete block cannot be stored in a RAM of the target device.

As described, embodiments of the invention can update a remote device block by block or even use portions or segments of an update file that are smaller than the block size of the target device, e.g., embodiments of the invention can use configurable sizes of data chunks that are ¼ or 1/8 of the block size of the target device. As further described, an embodiment (e.g., server 210) may selectively send either an uncompressed portion of updated software object 232 (update portion object 238), a patch element 233 object or a compressed patch portion object 234, e.g., based on comparing the sizes of these update objects, server 210 may select to send to target device 220 the smallest one.

As described, the set of update objects sent by server 210 to target device 220 may be a mix of patch elements 233, update portion objects 238, compressed patch elements 234 and compressed update portions 235. For example, server 210 may examine the sizes of a patch element 233, a compressed patch portion 234, a compressed update portion 235 and an update portion 238 and select to send update portion 238 if its size is close or similar to the sizes of the other update objects thus relieving target device 220 from the burden of decompressing data. In another case, e.g., when the size of an update potion 238 is substantially larger than the size of a compressed patch portion 234 and compressed update portion 235 which are similar in size, server 210 may select to send compressed update portion 235 (and not compressed patch portion 234) thus relieving target device 220 from the burden of processing patch data.

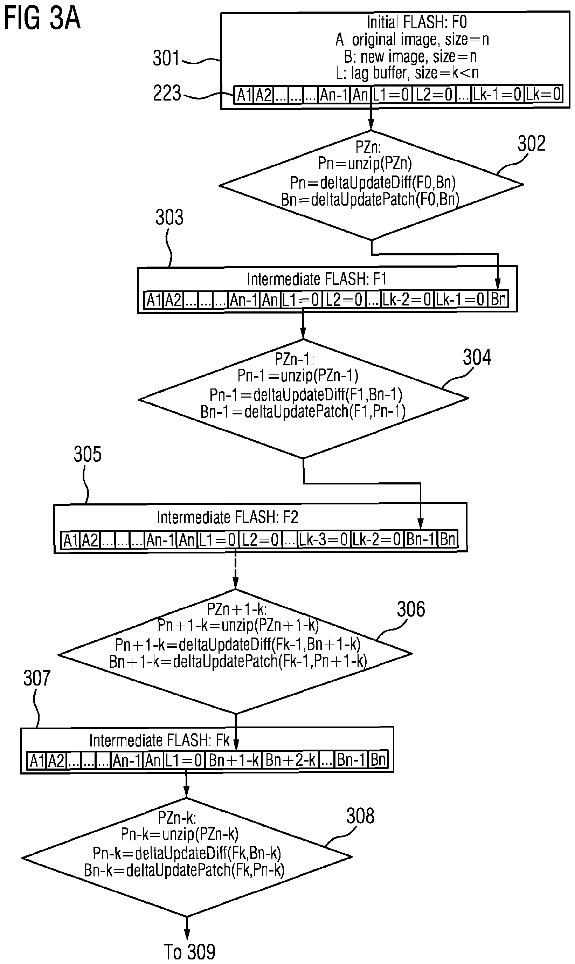

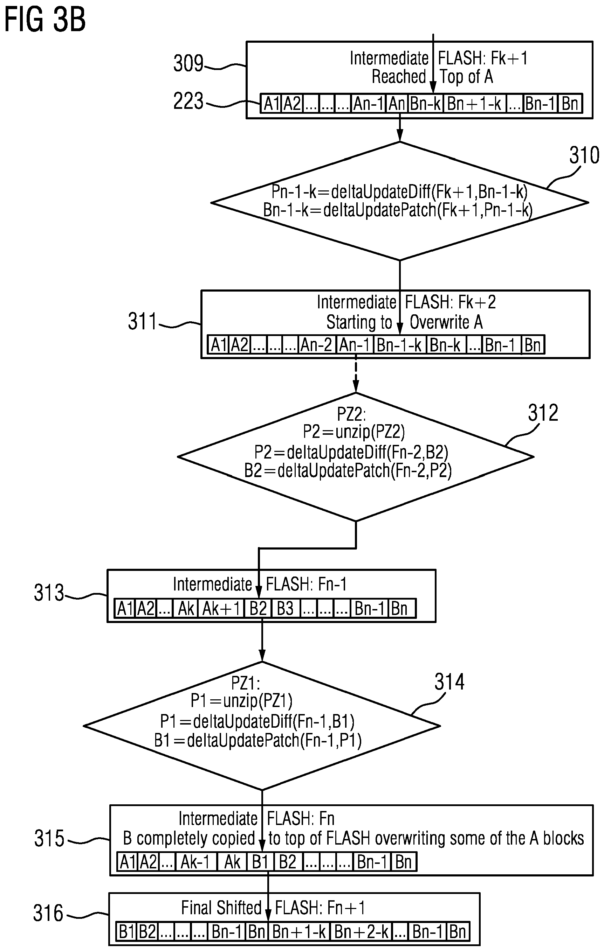

Reference is made to Figs. 3A and 3B which show arrangement of data on flash memory 223 in target device 220 and a flow of a method according to illustrative embodiments of the present invention. As shown by 301, in an initial state, a portion of flash memory 223 in target device 220 may be allocated to a lag buffer (denoted by blocks L1-Lk). For example, blocks L1 to Lk may be the lag buffer. As further shown by 301, at an initial state, the current software of target device (current software object 231) may be stored on flash memory 223 (e.g., blocks A0-An as shown, starting at address 0) and the lag buffer (blocks L1 to Lk) may be stored from the address immediately after the last block of current software object 231. For example, an update unit in target device 220 (not shown) may designate or allocate a lag buffer.

As shown by 302, a message containing a compressed patch portion 234 object (denoted PZn in Fig. 3A) may be received by target device 220 from server 210, the received compressed patch portion 234 may be decompressed to generate an uncompressed (or decompressed) patch element 233 object, and a portion of updated software object 232 (an update portion 238) may be generated by applying (or using information in) the patch element 233 object to current software object 231. Note that a patch element 233 may be generated by server 210 such that when applied to current software object 231 it generates a corresponding (update) portion 238 of updated software object 232, e.g., patch element 233 P0 may be used to create update portion 238 B0, patch element 233 P1 may be used to create update portion 238 B1 and so on, accordingly, target device 220 can use patch element 233 objects to create update portion 238 objects. Update portion 238 objects can be used to create updated software object 232, e.g., by concatenating them or by properly arranging them in flash memory 223.

As shown by 303, the update portion 238 object (denoted Bn Fig. 3A) may be stored at the end of the lag buffer, e.g., as far from current software object 231 as possible. In some embodiments, updated software object 232 may be created on flash memory 223 starting at its end and working down to its beginning, for example, the first portion of updated software object 232 created as shown by Bn in block 303 may be the last portion of updated software object 232. Other orders may be used, e.g., updated software object 232 may be created on flash memory 223 starting at its first address.

As shown by 304 through 310, the steps of receiving compressed patch portion 234 objects, using them to create update portion 238 objects and storing the update portion 238 objects in the lag buffer in flash memory 223 may be repeated such that updated software object 232 is gradually created and stored in flash memory 223. As shown by 311, when the lag buffer is exhausted, blocks or portion of current software object 231 may be overwritten by update portion 238 objects. For example, as shown in 311, the portion "An" of updated software object 232 is overwritten by the update portion 238 object denoted as Bn-1-k. As shown by 312 through 315, overwriting A 232 in flash memory 223 may continue until updated software object 232 is completely stored in flash memory 223 (e.g., the set of B1-Bn objects is identical to updated software object 232). As shown by 316, the set of update portion 238 objects (that is actually updated software object 232) may be moved to an address where a controller of target device 220 expects to find and image for execution, e.g., the set of update portion 238 objects may be moved to address 0.

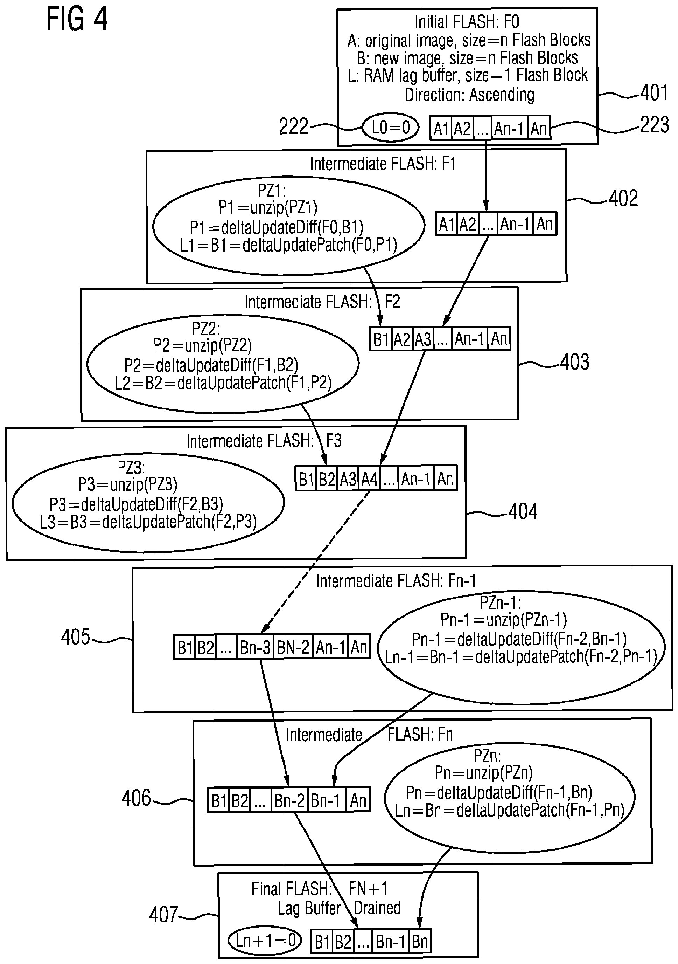

Reference is made to Fig. 4 which shows a lag buffer in RAM 222, arrangement of data on flash memory 223 and a flow of a method according to illustrative embodiments of the present invention. In some embodiments and as shown, the lag buffer may be a segment or portion of RAM 222. As further shown in 401, initially (prior to an update procedure) flash memory 223 includes current software object 231 (blocks A₁ through Aₙ).

As shown by 402, a first compressed portion of a patch element 233 (a compressed patch portion 234 object denoted PZ1 in Fig. 4) is received from server 210, decompressed to generate the patch element 233 object (denoted P1), and a first portion of updated software object 232 is created based on P1 and current software object 231 as described herein. As further shown by 403, the portion of updated software object 232 (denoted B1 in Fig. 4) is stored in flash memory 223, overwriting a first portion of current software object 231. The case shown in Fig. 4 may be one where there is no spare flash memory space in flash memory 223 thus the lag buffer is in RAM 222 and current software object 231 gets overwritten by updated software object 232 as updated software object 232 is created.

As shown by 403 through 406, the process or steps of receiving compressed portions of a patch elements 233 (e.g., compressed patch portion 234 objects), generate portions of updated software object 232 (update portion 238 objects) and overwriting current software object 231 may be repeated until, as shown by 407, current software object 231 is replaced by updated software object 232 in flash memory 223 thus completing an update procedure.

In some embodiments, the lag buffer (e.g., blocks L1 through Lk in 301 in Fig. 3) is the size of just, or exactly, a single flash memory block of flash memory 223. Accordingly, embodiments of the invention improve the technology of embedded systems in general and specifically, embodiments of the invention enable updating software or firmware in target computing devices where an A/B update procedure is impossible due to memory constraints and where there is not enough RAM to store more than a block of the flash memory. Otherwise described, embodiments of the invention provide and/or enable an update driver and/or an update method that is architecture aware thus further improving the technologies of, to name a few, managing remote devices and updating computing devices.

For example, based on awareness of the size of free space in a flash memory and/or RAM of a target device (e.g., 220) or a component in target system 260, parameters for an update procedure may be set by an embodiment. For example, based on architecture awareness, the size of patch elements 233 and/or compressed patch portion 234 objects may be set by server 210 and/or by management unit 252 (according to free memory in a RAM or flash memory in one of ECUs 250 in target system 260), the number of patch elements 233 objects to generate based on current software object 231 and B 322 (before current software object 231 in flash memory 223 is overwritten by updated software object 322) may be determined, by server 210 and/or by management unit 252 etc. As described, embodiments of the invention enable or provide an efficient compressed delta encoding method in that is highly beneficial for severely constrained storage environments, systems or devices, e.g., ECUs, for example, embodiment of the invention and are more efficient than known systems and methods, e.g., "piece-wise" raw compressed update (e.g. using the xz compression technique). It is noted that other compressors and/or decompressors may be used as described with reference to the xz compressor, e.g., any low footprint RAM, efficient compressor may be used (e.g., plugged in) without departing from the scope of the invention.

As described, according to the invention server 210 sets the size of portions sent to target device 220 based on TCD 236. The TCD 236 includes the amount of free or available space in RAM 222 and/or in flash memory 223 in target device 220 and/or TCD 236 includes the block size of flash memory 223 in target device 220 and so on. Specifically, the size of a lag buffer in target device 220 may be known to, or determined by, server 210, based in TCD 236. Accordingly, server 210 selects the size of the portions of data in update objects, e.g., in patch element 233, compressed patch portion 234, update portion 238 or compressed patch portion that will be sent to target device 220 such that the portions can be stored by target device 220 as described.

While as described, in some embodiments, a single flash memory block is used as a lag buffer and therefore, the size of portions sent to target device 220 is equal to, or less than, the size of a single flash memory block, other configurations or embodiments may be contemplated. For example, if there are three spare or free flash memory blocks in flash memory 223 or if RAM 222 can store data of three or more flash memory blocks (and this is recorded in TCD 236) then server 210 may automatically generate and/or send patch element 233, compressed patch portion 234, update portion 238 or compressed patch portion that include, or resolve to, portions of updated software object 232 that are the size of three flash memory blocks thus speeding up the update process. Accordingly, embodiments of the invention may not only enable updating remote devices with limited memory but also enable dynamically and/or automatically setting the size of messages and/or portions sent to a remote device such that the efficiency of an update process is maximized, e.g., by using the largest possible chunks of data sent to the remote device.

Embodiments of the invention further improve the relevant technological fields by dynamically selecting the type of data to include in update messages sent to a target device that is to be updated. As further described, an embodiment dynamically and automatically selects whether to send compressed data (first type) or uncompressed data (second type) and/or dynamically and automatically selects whether or not to use patch file data (third type) etc. Of course, any combination of types may be selected.

Dynamically and automatically selecting the type and attributes of data sent as described is based on the target device and/or a communication medium. Dynamically and automatically selecting the type and attributes of data sent is based on the target device's CPU capacity, RAM availability, flash memory size, flash memory block size and the like.

For example, assuming a first ECU 250 and a second ECU 250 need to be updated to the same updated software object 232 but these ECUs have different RAM sizes, different CPUs or different flash memory units, in such case, server 210 or management unit 252 may dynamically and automatically select to use compressed patch portion 234 for updating the first ECU 250 and use update portion 238 for updating the second ECU 250. It will be understood that any relevant aspect may be addressed by selecting the type and attributes of data sent to a target device dynamically and automatically, for example, increasing performance, reducing memory consumption etc.

Embodiments of the invention may further improve the relevant technological fields by dynamically selecting (e.g., by server 210) whether to send a compressed or uncompressed portions to a target device (e.g., to target device 220). Embodiments of the invention may further improve the relevant technological fields by dynamically selecting whether to send patch elements (e.g., patch elements 233 or compressed patch portions 234) or send portions of the actual update object (e.g., update portions 238 or compressed update portions 235). These capabilities of embodiments of the invention enable highly efficient update procedures that cannot be realized by known systems and methods.

For example, based on TCD 236, server 210 may determine that target device can allocate a large lag buffer but, in addition, target device 220 has limited computational capacity (e.g., due to a slow, old CPU), in such case, server 210 may automatically select to send large portions of uncompressed updated software object 232. In another case, e.g., when network bandwidth is limited, target device 220 includes a powerful CPU but can only allocate 128 bytes for the lag buffer, server 210 may automatically select to send small, compressed patch element 233 elements. Any combination of memory sizes and processing (e.g., compress, encrypt etc.) for portions sent by server 210 to target device 220 may be automatically selected by server 210. In addition, embodiments of the invention automatically select a memory in the target device, e.g., a controller 105 in target device 220 automatically selects to allocate a lag buffer in one of flash memory 223 or RAM 222 of target device 220.

Of course, the larger the lag buffer, the closer embodiments of the invention come to implementing a pure A/B update procedure. Accordingly, embodiments of the invention can provide the benefits of an A/B update procedure when an A/B update is possible but, in addition, embodiments of the invention enable various additional update modes or schemes, e.g., combinations of portion sizes and/or processing, update modes or schemes that cannot be provided by known systems and methods.

In some embodiments, the lag buffer is at the end (e.g. after) of the contiguous region where updated software object 232 will overwrite current software object 231, an embodiment may store updated software object 232 starting at the highest flash memory block in descending order. In the case where there will not be enough extra flash memory to simultaneously store all of both current software object 231 and updated software object 232, therefore some or all of current software object 231 will be erased during the storage of updated software object 232.

In some embodiments, each patch element 233, compressed patch portion 234, update portion 238 or compressed patch portion object received by target device 220 resolves to an integral number of flash memory blocks, e.g., the size of the portion of updated software object 232 in these objects is set by server 210 such that it can be stored on exactly one or more complete flash memory blocks. In some embodiments, server 210 sets the size of data in these objects to be the size of a single block in flash memory 223 of target device 220.

Generating either patch element 233, compressed patch portion 234, update portion 238 and/or compressed update portions 235 is done based on any part of current software object 231. For example, referring to blocks 302 and 303 in Fig. 3A, to create the portion update portion 238 of updated software object 232, server 210 examines any portion of current software object 231, that is, compressed patch portion 234 (or update portion 238) is generated not just by comparing block "An" to update portion 238 but by looking at any part of current software object 231. For example, an update portion 238 object is created or defined by shifting a portion of block An-1 or by copying data from block A3.

Using the entire current software object 231 for generating update objects as described means that the entire current software object 231 needs to be available to target device 220 when using data in update objects. However, as described, at some point, some of current software object 231 stored in target device 220 may be overwritten, for example, as shown by block 311 in Fig. 3B where block "An" of current software object 231 is overwritten by block Bn-1-k. Accordingly, unless the fact the memory containing updated software object 232 in target device 220 changes when some of current software object 231 blocks are overwritten by blocks of updated software object 232, target device 220 cannot properly use process or use update objects.

To solve the problem of current software object 231 becoming unavailable to target device 220 (since it is overwritten by updated software object 232 blocks as described), server 210 simulates or duplicates the memory of target device 220 as it evolves during an update session. For example, based on data in TCD 236, server 210 knows the type, size, blocks size and any other characteristics of RAM 222, flash memory 223 or any other memory in target device 220. Accordingly, when generating update objects, server 210 uses portions of updated software object 232 as described but, instead of also using portions of current software object 231, server 210 uses modified software object 239, a modified (or updated) version of current software object 231. For example, modified software object 239 (a modified version of current software object 231) is as shown in block 311, where instead of the original block "An" in current software object 231 (see 309 in Fig. 3A), modified software object 239, the modified version of current software object 231 has block Bn-1-k. Accordingly, modified software object 239 may be generated by replacing (or overwriting) a portion or segment of current software object 231.

For example, assuming current software object 231 comprises four blocks A0, A1, A2 and A3 and updated software object 232 comprises four blocks B0, B2, B2 and B3. To generate P0 233, server 210 may use the block sets (A0, A1,A2,A3) and (B0, B1,B2,B3), server 210 may then overwrite, or replace, block A0 in current software object 231 with block B0 (thus generating modified software object 239, a modified version of current software object 231) and then, to generate P1 233, server 210 may use the block sets (B0,A1,A2,A3) and (B0,B1,B2,B3) (note modified software object 239, a modified version of current software object 231, now excludes block A0 and includes block B0), to generate P2 233, server 210 may use the block sets (B0, B1,A2,A3) and (B0, B1,B2,B3), to generate P3 233, server 210 may use the sets (B0, B1,B2,A3) and (B0,B1,B2,B3).

By having server 210 generate update objects based on an updated software object 232 that is dynamically changing (as it does on the target device during the update process), e.g., A 232 is partly overwritten by blocks of updated software object 232, embodiments of the invention enable a target device to modify or overwrite current software object 231 while updating to updated software object 232 thus eliminating the need for the target device to store both current software object 231 and updated software object 232 at the same time.

In some embodiments, if updated software object 232 is not written to flash memory 223 in the proper place then after the complete updated software object 232 object is written to flash memory 223, the updated software object 232 object may be moved, copied or shifted to the proper location, e.g., such that it is stored at the starting address of (now overwritten current software object 231).

To enable a target device to generate or create blocks or portions of updated software object 232 using patch file data (e.g., compressed portions of a patch file), known systems and methods require that the target device include enough RAM space to store at least two blocks of flash memory. For example, if the flash memory block size is 512 bytes then the target device needs 1,024 bytes in RAM. This is because at least one block of updated software object 232 needs to be created in RAM and then written, as a whole, from RAM to the flash memory (writing to flash memory is done in complete blocks). In addition, for cases where the size of a patch portion used for creating the updated software object 232 block is the size of the updated software object 232 block, the target device needs an additional block in RAM for storing the patch file object. The RAM constraints and their linkage to the flash memory block size pose a problem for known systems and methods, e.g., using a new flash memory with larger block size may require replacing the RAM, or it may disable using patch file objects since there is not enough RAM to store two (larger) blocks of the new flash memory.

In some embodiments, each update object received by target device 220 resolves to an integral number of flash memory blocks, e.g., the size of the portion of updated software object 232 in these objects is set by server 210 such that it can be stored in exactly one or more complete flash memory blocks. In some embodiments, server 210 sets the size of data in these objects to be the size of a single block in flash memory 223 of target device 220. As discussed herein, in some embodiments, the size of data in these objects is not the size of an integral number of flash memory blocks, e.g., the size can be less than the size of a flash memory block in flash memory 223.

Embedded systems typically use "raw" flash memory banks, i.e. where "raw" signifies no operating system file system layer, accordingly, flash memory "affinity" is an important component of the efficiency of the algorithm. An example of flash memory affinity may be the largest number of bytes that can be written to the flash memory unit in one "burst" (e.g., 256 bytes), this value may be known to an embodiment, e.g., included in TCD 236 server 210 in server 210 and/or in management unit 256.

In current or known systems and methods used for updating target systems that use raw flash memory, the size of compressed chunks sent to a target system or device resolves to an exact integer number of physical FLASH blocks in the flash memory of the target device or system (possibly except for the last chunk). However, in practice, RAM limitations of the target device preclude the possibility of transferring such large chunks, that is, spare or available RAM in a target device may too small to store even a single flash memory block, let alone a number of such blocks.

To solve memory problems such as the one discussed above, e.g., to minimize RAM usage and/or optimize operation by using burst size objects, some embodiments define and use logical sections the size of which is calculated such that 2^{k} logical sections fit in a physical flash memory block of the target device or can be written in a single burst. For example, if the block size of flash memory 223 is 512 bytes, server 210 and/or management unit 252 may select chunk size of 128 (2⁷) bytes or chunk size of 64 (2⁶) bytes and so on. Other sizes may be used, e.g., to address other constraints such as burst size.

As described, using data in TCD 236, server 210 and/or management unit 252 may know (determine) how much of RAM 222 can be used for storing chunks sent to target device 220, e.g., if, based on TCD 236 server 210 determines that, in addition to data already stored in RAM 222, an additional object the size of 70 bytes can be stored in RAM 222 then server 210 may set the size of objects sent to target device 220, e.g., any of patch elements 233, compressed patch portions 234, compressed update portions 235 and/or update portions 238 to be no more than 64 bytes.

Accordingly, an embodiment may automatically determine and use an optimal size for chunks or objects sent to a target device during un update procedure based on, or according to, available RAM in the target device. It is noted that most of currently known systems use flash memory block sizes that are 2ⁿ bytes, accordingly, embodiments of the invention may be readily used to improve currently known systems and methods.

In some embodiments, server 210 automatically sets the size of update objects based on the size, capacity or attributes of a RAM 222 in target device 220. For example, instead of generating update objects that include data the size of an integral number of blocks of updated software object 232, server 210 may generate update objects for sections, portions, segments or fragments of blocks of updated software object 232. For example, patch element 233, compressed patch portion 234, update portion 238 or compressed patch portion objects may be generated, by server 210, for portions of updated software object 232 that are the size of 1/n flash memory blocks, where n=2k, and where k is a positive integer, e.g., server 210 generates compressed patch portion or compressed update objects 235 that enable generating ½ or ¼ of a block.

For example, assuming that based on TCD 236, server 210 determines or identifies that the block size of flash memory 223 is 512 bytes and that RAM 222 available for storing one block of updated software object 232 (512 bytes in the current example) and one compressed patch portion 234 object is only 640 bytes. In such case, server 210 may generate compressed patch portion 234 or compressed patch portion objects for portions or sections of updated software object 232 that are 128 bytes or less (assuming that the size of a compressed patch portion 234 or compressed patch portion object is always smaller than that of the corresponding portion or section of updated software object 232). Accordingly, target device 220 can store, in RAM, an entire block of updated software object 232 and a compressed patch portion 234 or compressed patch portion object used for creating the updated software object 232 block. For example, using PZ0 234 in its RAM, target device 220 writes the first 128 bytes of updated software object 232 to a 512 lag buffer in RAM 222 at offset 0, then PZ0 234 is overwritten by received PZ1 234 and the next 128 bytes of updated software object 232 are written to the lag buffer at offset 128 and so on. When the lag buffer is full (e.g., four compressed patch portion 234 have been received, processed and the resulting portions of updated software object 232 stored in the lag buffer as described) the lag buffer is written to flash memory 223 and the process continues until current software object 231 is replaced by updated software object 232 as described. Accordingly, embodiments of the invention improve the technological field of managing and updating computing devices by enabling target devices with limited resources (e.g., limited RAM or flash memories) to be updated. As described, selecting which update objects to use (e.g., patch element 233, update portion 238, compressed patch portion 234 or compressed patch portion) and selecting the size of update objects or portions may be according to any attribute of the target device, for example, server 210 may select to use update portion 238 objects having a large size when updating a first ECU and select to use compressed patch portion 234 objects having a small size when updating a second, different type of ECU.

Some embodiments of the invention may include picking or creating an optimized order of portions to update. An embodiment may update the portions one by one according to their original order in the memory. Alternatively, or additionally, an embodiment may update the portions according to a different order in order to optimize bandwidth, update time or another update parameter. For example, having divided updated software object 232 into a set of chunks, it may be determined by an embodiment that updating the 4^{th} chunk before updating 1^{st} chunk is beneficial as it reduces the overall update size or time to apply.

Some embodiment may pick or create the optimized order based on running a simulation of the update offline, e.g., on a server 210. For example, the server may go over all the possible combinations of update order in order to pick the best one. Another example is that the server will utilize a greedy algorithm in order to pick the best order. For example, the server may choose the best first portion to update, based on the optimization criteria. Next the server may pick which is the second portion to update, assuming the first portion to update is the one picked by the greedy algorithm and so on.

An embodiment of the invention may support legacy target devices which are not designed to support the optimized update mechanism or any kind of non-trivial update mechanism at all. For example, in some embodiments, an update manager (e.g., in a server 210 or network) may first send an updater software unit to the target device 220 over, or using, a legacy update protocol, for example, the Unified Diagnostic Services (UDS) protocol. Next the updater software unit may execute on the target device. The updater software unit may execute from memory, in a temporary, non-persistent fashion. The updater software unit may then receive additional data from the update manager in order to complete the update process. This data may include differential update data to be applied on the target device. This data may include patching to be done to the target device. This data may include update data for several portions of the target device. Once the updater software receives the data and applies it, the updater software may be removed from the target device. The updater software unit may include software required for the application of the update. For example, it may include software to decompress the update content. An embodiment of the invention may optimize and improve this process further by having the updater software use preexisting software on the target device. For example, the updater software may use preexisting decompression software which already exists in the target device memory.

An embodiment of the invention may replace software functions on the target device by patching the target software to jump to a new section of the software where the content of the new function will reside. At the end of the new function the code will return to the original caller or to the original function jump location, from which the code execution will continue to the original caller.

An embodiment of the invention may use a function pointer table to jump to the most up to date functions in the software. The software may use the function pointer table to derive to in which address each relevant function resides. An update of the software may include updating pointer table as well as new content, including the content of the updated functions. Updating a function pointer table may offer a substantial improvement in terms of update parameters (such as size and time to apply) over overriding the original functions with new content which would cause additional functions in the software which use the updated functions to change as well.

Update techniques such as patching the software or using the function table may mean that the software which would eventually be running in the target device is different than the software that was generated by the compilation or build process of the software. Therefore, embodiments of the invention may include adding to the build process of the software the execution of the update process offline, for example on a server 210, in order to generate the software package that would eventually be executed on the target device after the update process. This offline version of the updated software would then be part of the official software generated by the regular build process and it may optionally be tested as a part of the quality assurance process of the software development. This means that the final software generated and tested by the software development process would be exactly the same as the one which would eventually be executed on the target device, after the update.

Embodiments of the invention may use various software distribution methods. For example, in some embodiments, software may be distributed to customer or to target devices through other channels which are not the optionally over the air update channel that may apply the update techniques described herein. Embodiments of the invention may include distributing the output of the modified software building process which includes the update simulation process through the additional channels as well. For example, it may mean that the software which would be used in a vehicle dealership to flash memory a "clean" ECU that has no software on it or may have a faulty version or an old version, using legacy software flashing or software updating process such as UDS, would be the software generated by the updated software development process, meaning it may include the function table or patches, and may include old code which is bypassed as well as old versions of the function table.

In some embodiments, rather than filling the flash memory or other non-volatile memory in target device 220 block by block, e.g., from address zero and up, embodiments of the invention may store, in each flash memory block, a limited amount of data such that additional data can be written to the block. For example, if the block size of flash memory 223 is 512 bytes then updated software object 232 may be written to flash memory 233 by writing the first 256 bytes of updated software object 232 to block "0", the next 256 bytes of updated software object 232 to block "1" and so on. The storage space left available in blocks as described may be used for, or in, a subsequent update procedure, e.g., new software in a subsequent update may be written to spaces left in blocks during a previous update as described. Leaving spaces as described may be used in conjunction with a jump table as described herein. For example, to update a specific function that was stored in a firs address, space in one or more of the blocks (left as described) may be found, the updated function may be written thereto (new address of the function) and a jump table may be updated to point to the new address. In some embodiments, rather than using a jump table, after a new or updated function is stored in a new address, the entire image may be searched for calls (or jumps as known in the art) to the address of the old (pre-update, now obsolete) function and the calls, jumps or other references to the old functions may be replaced by the new address.

In some embodiments, generating an update image or object (e.g., updated software object 232) may include arranging or grouping software modules, functions or units, in the update image or object, according to the likelihood they will be updated. For example, utilities or functions that do not typically change from one update to the next may be grouped together. Accordingly, when updating target device 220, an update procedure or unit may ignore (or leave as is) a part of an existing or current image in target device 220, e.g., only overwrite a specific part where functions that are updated are located, e.g., an update may only replace the last 3 blocks of an image in target device 220 leaving the rest of the blocks as they were.

In some embodiments, generating an update image or object (e.g., updated software object 232) may include arranging or grouping functions or software units, in the update image or object, such that a complete set of one or more functions or units can be stored in one or more predefined blocks. For example, knowing that a set of functions are typically updated together (e.g., the functions in the set are inter-dependent such that if a first function in the set is updated then it is highly likely that the other functions in the set will need to be updated), server 210 may pack the set of functions such that they are stored, in flash memory 223, in a contiguous set of blocks. Accordingly, updating the set of functions may be improved as it only requires replacing a set of contiguous, known blocks.

Some embodiments of the invention may dynamically and/or automatically select an update mode, or parameters to be used in an update procedure. For example, a mode or parameters governing an update procedure (e.g., chunk size, whether or not to compress chunks etc.) may be automatically selected based on the type and attributes of a target device or system, based on network bandwidth and/or based on other aspects. For example, using data in TCD 236, server 210 may select to use a jump table for updating a first ECU, a first chunk size to be used for updating a second ECU and a second, different chunk size for updating a third ECU.

Server 210 and/or management unit 525 may select an order for updating a plurality of ECUs. For example, when updating a number of ECUs 250 in system 260, based on TCD 236, management unit 525 may identify, and select to update first, the most critical ECU in ECUs 250. In another example, if an update of a specific ECU is likely to fail, the specific ECU may be updated last or first. In yet other cases, inter-dependency between ECUs may be taken into account, e.g., if after an update a first ECU cannot function properly unless a second ECU is updated then the second ECU may be updated first. Accordingly, embodiments or the invention may automatically select and mode and order for updating devices and systems.

Since different update options are offered in this invention, an embodiment of the invention may pick the best option for a particular update in order to optimize the update process. An embodiment may pick the best option by running update simulations offline in the server and measuring the performance of the different options. An embodiment may pick the best option by modeling the performance of the different options based on attributes of the software and of the difference between the old and new software.

As described, a computer-implemented method of updating a current software object (e.g., current software object 231) stored on a target device (e.g., on target device 220) to an updated software object may include generating, e.g., by server 210, a first update object usable for generating a first portion of the updated software object based on data in the current software object. For example, a first update object (e.g., a compressed patch portion 234) may be generated, by server 210, based on updated software 232 and based on current software object 231. The method may further include generating, e.g., by server 210, a modified software object based on content in the first update object and based on the data in the current software. For example, modified software object 239 may be generated or created by applying the first update object to (possibly a copy of) current software object 231. The method may further include generating by the server a second update object usable for generating a second portion of the updated software object based on data in the modified software object. For example, a second update object may be generated based on data in modified software object 239 and not based on current software object 231 as done for the first update object.

A method may include determining, e.g., by server 210 and based on a size of a lag buffer in a memory of the target device, the number of update objects to generate based on the current software object. For example, if server 210 determines (e.g., based on TCD 236) that target device 220 can store five portions of updated software object 232 without overwriting current software object in flash memory 223 then server 210 may generate five update objects based on current software object 231 and server 210 may generate a sixth updated object based on modified software object 239. The size of update object generated by server 210 or by management unit 252 may be selected, by server 210 or by management unit 252, based on the size of a buffer in a random access memory (RAM) included in the target device.

In addition to selecting the size of update objects, server 210 or management unit 252 may select the type of update object to generate and/or send to target device 220. For example, server 210 or management unit 252 may select to send any of the update objects as described. Specifically, during an update of target device 220, server 210 may send a few compressed update portions 235, a few (uncompressed) update portions 238 and so on. As described, selection of which type of update objects to be sent may be dynamic (e.g., different update objects may be selected during steps of an update).

In the description of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the scope of the invention.

## Claims

1. A computer-implemented method of updating a target device (220), the method comprising:
determining by a server (210), characteristics of the target device (220) based on:
an attribute of the target device (220), wherein the attribute of the target device (220) is based on: the target device's CPU capacity, RAM availability, flash memory size and flash memory block size,
a hardware of the target device (220),
a software version included in the target device (220), and
a speed with which a target device (220) can receive data from a network; and
generating, by the server (210), update objects (233,234,235,238) usable for updating the target device (220), wherein
the update objects comprise more than one update object,
based on the determined characteristics of the target device (220), a type of data to include in the update objects (233, 234, 235, 238) is selected, wherein the type of data is compressed, uncompressed, patch file data or a combination thereof,
wherein the generating is based on the selected type of data, and
wherein the generating is based on examining digital content in a current software object (231), the content of an the- updated software object (232) and the content of a modified software object (239), wherein the modified software object (239) is stored in a storage system (230) connected to the server (210) and corresponds to the current software object stored in the target device (220) as it evolves during an update session.

2. The method of claim 1, comprising:
providing, based on the determined characteristics, the one or more update objects (233,234,235,238) to the target device (220); and
updating the current software object (231) stored on the target device (220) to the updated software object (232) using the one or more update objects (233,234,235,238). Internal

3. The method of one of claims 1-2, comprising, determining, by the server (210), at least one of:
a size of an update object (233,234,235,238), and
a number of update objects (233,234,235,238) to generate.

4. The method of claim 3, wherein determining one of the size and number is based on available memory in the target device (220).

5. The method of one of claims 1-4, wherein the server (210) is adapted to select to send one or more of update objects (233, 234, 235, 238) to the target device (220) such that when processed by the target device (220) usage of a resource in the target device (220) is minimized or optimized wherein the resource is at least one of: a CPU, a RAM, a flash memory and a network connection.

6. The method of one of claims 1-5, wherein an update object (233,234,235,238) is one of: a patch element (233), an update portion object (238), a compressed patch element (234) and a compressed update portion (235).

7. The method of one of claims 1-6, wherein a set of update objects (233,234,235,238) usable for updating to an updated software object (232) includes a mix of two or more of: a patch element (233), an update portion object (238), a compressed patch element (234) and a compressed update portion (235). Internal

8. The method of claim 7, wherein the server (210) examines the size of each update object (233,234,235,238) within the set of update objects (233,234,235,238) and selects to send an uncompressed update object (238) if its size is close to the sizes of the other examined update objects (233, 234, 235).

9. A computer program comprising instructions which, when executed by a processor, cause the processor to implement any of the methods of claims 1-8.

10. 12. A computer readable medium comprising instructions which, when executed by a processor, cause the processor to implement any of the methods of claims 1-8.

## Patentansprüche

1. Computerimplementiertes Verfahren zum Aktualisieren einer Zielvorrichtung (220), das Verfahren aufweisend:
Bestimmen, durch einen Server (210), von Charakteristika der Zielvorrichtung (220) basierend auf:
einem Attribut der Zielvorrichtung (220), wobei das Attribut der Zielvorrichtung (220) auf Folgendem basiert: CPU-Kapazität der Zielvorrichtung, RAM-Verfügbarkeit, Flash-Speicher-Größe und Flash-Speicher-Blockgröße,
einer Hardware der Zielvorrichtung (220),
einer Softwareversion, die in der Zielvorrichtung (220) enthalten ist, und
einer Geschwindigkeit, mit der eine Zielvorrichtung (220) Daten von einem Netzwerk empfangen kann; und
Erzeugen, durch den Server (210), von Aktualisierungsobjekten (233, 234, 235, 238), die zum Aktualisieren der Zielvorrichtung (220) verwendbar sind, wobei die Aktualisierungsobjekte mehr als ein Aktualisierungsobjekt aufweisen,
wobei basierend auf den bestimmten Charakteristika der Zielvorrichtung (220) ein Typ von Daten, die in den Aktualisierungsobjekten (233, 234, 235, 238) enthalten sein sollen, ausgewählt wird, wobei der Typ von Daten komprimiert, nicht komprimiert, Patchdateidaten oder eine Kombination davon ist, wobei das Erzeugen auf dem ausgewählten Typ von Daten basiert, und
wobei das Erzeugen auf Untersuchen von digitalem Inhalt in einem gegenwärtigen Softwareobjekt (231), des Inhalts eines aktualisierten Softwareobjekts (232) und
des Inhalts eines modifizierten Softwareobjekts (239) basiert, wobei das modifizierte Softwareobjekt (239) in einem Speichersystem (230), das mit dem Server (210) verbunden ist, gespeichert ist und mit dem gegenwärtigen Softwareobjekt, das in der Zielvorrichtung (220) gespeichert ist, korrespondiert, während es sich während einer Aktualisierungssitzung entwickelt.

2. Verfahren nach Anspruch 1, aufweisend:
Bereitstellen, basierend auf den bestimmten Charakteristika, des einen oder der mehreren Aktualisierungsobjekte (233, 234, 235, 238) der Zielvorrichtung (220); und
Aktualisieren des gegenwärtigen Softwareobjekts (231), das in der Zielvorrichtung (220) gespeichert ist, zu dem aktualisierten Softwareobjekt (232) unter Verwendung des einen oder der mehreren Aktualisierungsobjekte (233, 234, 235, 238).

3. Verfahren nach einem der Ansprüche 1-2, aufweisend Bestimmen, durch den Server (210), mindestens eines:
einer Größe eines Aktualisierungsobjekts (233, 234, 235, 238), und
einer Anzahl von Aktualisierungsobjekten (233, 234, 235, 238), die erzeugt werden sollen.

4. Verfahren nach Anspruch 3, wobei Bestimmen eines der Größe und der Anzahl auf dem verfügbaren Arbeitsspeicher in der Zielvorrichtung (220) basiert.

5. Verfahren nach einem der Ansprüche 1-4, wobei der Server (210) angepasst ist, auszuwählen, ein oder mehrere von Aktualisierungsobjekten (233, 234, 235, 238) an die Zielvorrichtung (220) derart zu senden, dass, wenn sie durch die Zielvorrichtung (220) verarbeitet werden, die Verwendung eines Betriebsmittels in der Zielvorrichtung (220) minimiert oder optimiert wird, wobei das Betriebsmittel mindestens eines von Folgendem ist: eine CPU, ein RAM, ein Flash-Speicher und eine Netzwerkverbindung.

6. Verfahren nach einem der Ansprüche 1-5,
wobei ein Aktualisierungsobjekt (233, 234, 235, 238) eines von Folgendem ist: ein Patchelement (233), ein Aktualisierungsabschnittobjekt (238), ein komprimiertes Patchelement (234) und ein komprimierter Aktualisierungsabschnitt (235).

7. Verfahren nach einem der Ansprüche 1-6, wobei ein Satz von Aktualisierungsobjekten (233, 234, 235, 238), die zum Aktualisieren zu einem aktualisierten Softwareobjekt (232) verwendbar sind, eine Mischung von zwei oder mehreren von Folgendem enthält: ein Patchelement (233), ein Aktualisierungsabschnittobjekt (238), ein komprimiertes Patchelement (234) und ein komprimierter Aktualisierungsabschnitt (235).

8. Verfahren nach Anspruch 7,
wobei der Server (210) die Größe jedes Aktualisierungsobjekts (233, 234, 235, 238) in dem Satz von Aktualisierungsobjekten (233, 234, 235, 238) untersucht und auswählt, ein nicht komprimiertes Aktualisierungsobjekt (238) zu senden, wenn dessen Größe nahe den Größen der anderen untersuchten Aktualisierungsobjekte (233, 234, 235) ist.

9. Computerprogramm, Anweisungen aufweisend, die, wenn sie durch einen Prozessor ausgeführt werden, den Prozessor veranlassen, beliebige der Verfahren nach den Ansprüchen 1-8 zu implementieren.

10. Computerlesbares Medium, Anweisungen aufweisend, die, wenn sie durch einen Prozessor ausgeführt werden, den Prozessor veranlassen, beliebige der Verfahren nach den Ansprüchen 1-8 zu implementieren.

## Revendications

1. Procédé mis en oeuvre par ordinateur de mise à jour d'un dispositif cible (220), le procédé comprenant :
la détermination par un serveur (210), de caractéristiques du dispositif cible (220) en fonction :
d'un attribut du dispositif cible(220), dans lequel l'attribut du dispositif cible (220) est basé sur : la capacité d'unité centrale, la disponibilité de RAM, la taille de mémoire flash et la taille de bloc de mémoire flash du dispositif cible,
d'un matériel du dispositif cible (220),
d'une version logicielle incluse dans le dispositif cible (220), et
d'une vitesse à laquelle un dispositif cible (220) peut recevoir des données à partir d'un réseau ; et
la génération, par le serveur (210), d'objets de mise à jour (233,234,235,238) utilisables pour la mise à jour du dispositif cible (220), dans lequel
les objets de mise à jour comprennent plus d'un objet de mise à jour, en fonction des caractéristiques déterminées du dispositif cible (220), un type de données à inclure dans les objets de mise à jour (233, 234, 235, 238) est sélectionné, dans lequel le type de données est des données compressées, des donnée non compressées, des données de fichier de correctif ou une combinaison de celles-ci, dans lequel la génération est basée sur le type de données sélectionné, et
dans lequel la génération est basée sur l'examen d'un contenu numérique dans un objet logiciel actuel (231), du contenu d'un objet logiciel mis à jour (232) et du contenu d'un objet logiciel modifié (239), dans lequel l'objet logiciel modifié (239) est stocké dans un système de stockage (230) connecté au serveur (210) et correspond à l'objet logiciel actuel stocké dans le dispositif cible (220) au fur et à mesure qu'il évolue durant une session de mise à jour.

2. Procédé selon la revendication 1, comprenant :
la fourniture, en fonction des caractéristiques déterminées, des un ou plusieurs objets de mise à jour (233,234,235,238) au dispositif cible (220) ; et
la mise à jour de l'objet logiciel actuel (231) stocké sur le dispositif cible (220) en l'objet logiciel mis à jour (232) à l'aide des un ou plusieurs objets de mise à jour (233,234,235,238).

3. Procédé selon l'une des revendications 1-2, comprenant, la détermination, par le serveur (210), d'au moins :
une taille d'un objet de mise à jour (233,234,235,238) et
d'un nombre d'objets de mise à jour (233,234,235,238) à générer.

4. Procédé selon la revendication 3, dans lequel la détermination de la taille et du nombre est fonction de la mémoire disponible dans le dispositif cible (220).

5. Procédé selon l'une des revendications 1 à 4, dans lequel le serveur (210) est conçu pour sélectionner d'envoyer un ou plusieurs objets de mise à jour (233, 234, 235, 238) au dispositif cible (220) de telle sorte que, lorsqu'ils seront traités par le dispositif cible (220), l'utilisation d'une ressource dans le dispositif cible (220) soit minimisée ou optimisée, dans lequel la ressource est au moins l'une : d'une unité centrale, d'une RAM, d'une mémoire flash et d'une connexion réseau.

6. Procédé selon l'une des revendications 1 à 5, dans lequel un objet de mise à jour (233,234,235,238) est l'un : d'un élément de correctif (233), d'un objet de partie de mise à jour (238), d'un élément de correctif compressé (234) et d'une partie de mise à jour compressée (235).

7. Procédé selon l'une des revendications 1 à 6, dans lequel un ensemble d'objets de mise à jour (233,234,235,238) utilisable pour la mise à jour en un objet logiciel mis à jour (232) comporte un mélange de deux ou plusieurs : d'un élément de correctif (233), d'un objet de partie de mise à jour (238), d'un élément de correctif compressé (234) et d'une partie de mise à jour compressée (235).

8. Procédé selon la revendication 7, dans lequel le serveur (210) examine la taille de chaque objet de mise à jour (233,234,235,238) dans l'ensemble d'objets de mise à jour (233,234,235,238) et sélectionne d'envoyer un objet de mise à jour non compressé (238) si sa taille est proche de la taille des autres objets de mise à jour examinés (233, 234, 235).

9. Programme d'ordinateur comprenant des instructions qui, à leur exécution par un processeur, amènent le processeur à mettre en oeuvre l'un quelconque des procédés selon les revendications 1 à 8.

10. Support lisible par ordinateur comprenant des instructions qui, à leur exécution par un processeur, amènent le processeur à mettre en oeuvre l'un quelconque des procédés des revendications 1 à 8.
